# EUROPEAN PATENT APPLICATION

(11) **EP 4 398 448 A1**
(43) Date of publication of application: **10.07.2024**
(21) Application number: 23829757.6
(22) Date of filing: 12.05.2023
(51) Int. Cl.: H02J 7/00, H02M 3/156, H02M 1/00, H02M 1/08

(54) **POWER SOURCE MODULE AND ELECTRIC APPARATUS**

(30) Priority: 27.06.2022 CN 202210734401
(71) Applicant: Ningde Amperex Technology Limited, Ningde, Fujian 352100 (CN)
(72) Inventor: MING, Bangsheng, Ningde, Fujian 352100 (CN); GAO, Yuan, Ningde, Fujian 352100 (CN)
(74) Representative: Klunker IP Patentanwälte PartG mbB
(86) International application number: PCT/CN2023/094034
(87) International publication number: WO 2024/001571

(57) **Abstract**

This application provides a power module and an electrical device. The power module includes a battery cell and a circuit board electrically connected to the battery cell. A number of the battery cell is one. The battery cell is configured to feed a first voltage to the circuit board. The battery cell includes a housing and an electrode assembly disposed in the housing. The circuit board includes a buck-boost circuit and at least two output terminals. The buck-boost circuit is configured to receive the first voltage and step up or step down the first voltage, so as to output at least two different second voltages to the at least two output terminals respectively. Each of the output terminals is configured to feed one of the second voltages to a drive circuit in a load electrically connected to the output terminal. Therefore, by outputting different second voltages through a single battery cell, the power module saves the manufacturing cost of the power module and increases the energy density of the power module.

## Description

### CROSS-REFERENCE TO RELATED APPLICATIONS

This application claims priority to Chinese Patent Application No. 202210734401.4, filed with the China National Intellectual Property Administration on June 27, 2022 and entitled "POWER MODULE AND ELECTRICAL DEVICE", which is incorporated herein by reference in its entirety.

### TECHNICAL FIELD

This application relates to the field of battery technology, and in particular, to a power module and an electrical device.

### BACKGROUND

Battery cells are widely used in electronic products such as an electronic mobile device, and people are imposing higher requirements on performance indicators of a battery cell. A battery pack formed by connecting a plurality of battery cells in series and parallel can provide a higher supply voltage, but is complicated in structure and costly to manufacture. In addition, the energy density of the battery pack is not high.

### SUMMARY

In view of the disadvantages of the prior art, it is necessary to disclose a power module.

In addition, it is necessary to provide an electrical device containing the power module.

According to a first aspect, this application provides a power module. The power module includes a battery cell and a circuit board electrically connected to the battery cell. The number of the battery cells in the power module is one. The battery cell is configured to feed a first voltage to the circuit board. The battery cell includes a housing and an electrode assembly disposed in the housing. The circuit board includes a buck-boost circuit and at least two output terminals. The buck-boost circuit is configured to receive the first voltage and step up or step down the first voltage, so as to output at least two different second voltages to the at least two output terminals respectively. Each of the output terminals is configured to feed one of the second voltages to a drive circuit in a load electrically connected to the output terminal. The disposed buck-boost circuit steps up or down the first voltage fed by a single battery cell, so as to increase the range of a supply voltage of a single battery cell and feed power to different drive circuits in the load separately, where the load is powered by the power module. Compared with a battery pack formed of a plurality of battery cells connected in series and parallel, the power module according to this application reduces the space required for packaging the battery cell, and avoids the need of matching parameters for a plurality of battery cells based on parameters such as capacity, voltage, and internal resistance, thereby reducing the risk of battery cell deterioration caused by a voltage difference between the plurality of battery cells, and improving the yield rate, quality, and service life of the battery.

In some possible implementations, the circuit board is further configured to receive at least one feedback signal output by the drive circuit in the load. The feedback signal is used for indicating a rated voltage of the drive circuit. The buck-boost circuit adjusts a corresponding second voltage to the rated voltage based on the feedback signal, and outputs the second voltage to the drive circuit through a corresponding output terminal. The feedback signal is received through the circuit board, so that the buck-boost circuit obtains the rated voltage of the drive circuit, thereby controlling the voltage value of the second voltage to be output. In this way, a feedback mechanism is formed so that the buck-boost circuit can meet power requirements of different drive circuits.

In some possible implementations, the feedback signal is a pulse signal; and the drive circuit is able to feed different rated voltages back to the circuit board by adjusting a duty cycle of the pulse signal. The pulse signal with a specified duty cycle is output through the drive circuit to indicate the rated voltage of the drive circuit. In addition, feedback signals indicating different rated voltages are output by adjusting the duty cycle of the pulse signal, so that the drive circuit can be adapted to a variety of electronic components with different rated voltage values, thereby expanding the application range of the drive circuit.

In some possible implementations, the buck-boost circuit includes a switch element. The switch element includes a control terminal and a first connection terminal. The control terminal is configured to receive the feedback signal. The first connection terminal is configured to receive the first voltage. The switch element is switched between an on-state and an off-state based on the duty cycle of the feedback signal, so as to adjust a voltage value of the second voltage. The duty cycle of the second voltage is adjusted by switching the switch element between the on state and the off state, thereby adjusting the voltage value of the second voltage. In this way, the duty cycle of the second voltage corresponds to the duty cycle of the feedback signal, so that the second voltage matches the rated voltage of the drive circuit.

In some possible implementations, the buck-boost circuit further includes an inductor. The switch element further includes a second connection terminal. The second connection terminal is electrically connected to the inductor. The inductor is electrically connected to the drive circuit. The voltage value of the second voltage is adjustable by adjusting an inductance value of the inductor. By disposing the inductor and charging and discharging the inductor in response to the switch element, the inductor provides energy to the drive circuit, so as to feed power to the drive circuit. By adjusting the inductance value of the inductor, the voltage drop on the inductor can be adjusted, thereby affecting the charge-and-discharge process of the inductor, and in turn, adjusting the voltage value of the second voltage.

In some possible implementations, a capacity of a single battery cell in the voltage module is 5 to 100 A/h, the first voltage is 3.0 V to 5.0 V, and a ratio of the second voltage to the first voltage is 0.2 to 3, so as to meet requirements of different electrical devices for the battery capacity. In this application, because the power demand of the load (external electrical device) is satisfied by using a single battery cell in combination with a buck-boost circuit, the ratio of the second voltage to the first voltage is preferably 1.5 to 2.5. In this way, in a case of using an electrical device with an operating voltage significantly higher than the output voltage of a single conventional battery cell (such as a tablet computer, a notebook computer, a robot cleaner, or an electric tool), the buck-boost circuit can increase the voltage of the single battery cell to meet the power requirements.

In some possible implementations, the power module further includes a housing. The battery cell and the power module are accommodated in the housing, and the circuit board is fixed onto the battery cell or the housing. In this way, the housing can package the battery cell and the circuit board together, thereby being more adaptable to the power requirements of different loads, and facilitating the mounting of the power module and the loads. In designing the loads, it is not necessary to consider the mounting or layout of the circuit board that serves the step-up and step-down function. In some possible implementations, the housing includes a first sealing film and a second sealing film disposed opposite to each other. The first sealing film includes a first metal layer. The second sealing film includes a second metal layer. A thickness of at least one of the first metal layer or the second metal layer is greater than 40 µm. By disposing the first sealing film and the second sealing film to seal the housing and protect the battery cell, because the mass of a single battery cell is greater than a small battery cell connected in series and parallel, the first metal layer or the second metal layer with a thickness greater than 40 µm can reduce the safety risk caused by mechanical abuse of the battery cell.

In some possible implementations, the electrode assembly assumes a stacked structure or a j elly-roll structure.

In some possible implementations, the electrode assembly assumes a multi-electrode structure to improve capabilities of charging and discharging and reduce the heat generated by the single battery cell due to a sharp change of an internal current of the battery cell caused by voltage step-up or step-down or reduce the adverse effect caused by such factors to safety performance.

The electrode assembly according to this application is diverse in structure and widely applicable.

In some possible implementations, the electrode assembly includes a positive electrode plate. The positive electrode plate includes a positive current collector and a positive active material layer. A safety primer is further disposed between the positive current collector and the positive active material layer. The safety primer disposed between the positive current collector and the positive active material layer can protect the positive current collector, reduce the risk of a short circuit of the electrode assembly, and in turn, enhance the safety performance of the battery cell. Preferably, the safety primer is a lithium iron phosphate coating.

In some possible implementations, the housing includes a first end wall and a second end wall disposed opposite to each other. The battery cell includes a positive electrode and a negative electrode. The positive electrode and the negative electrode are led out from the first end wall and electrically connected to the circuit board. A first insulator is disposed between the circuit board and the first end wall. The first insulator disposed between the circuit board and the first end wall can reduce the mechanical collision or friction between the circuit board and the battery cell, and reduce the risk of poor contact between the circuit board and the battery cell.

In some possible implementations, the power module further includes a second insulator. The second insulator is connected to a surface of the housing. The first end wall and the second insulator close in to form an accommodation space. The circuit board and the first insulator are disposed in the accommodation space. By disposing the second insulator and letting the circuit board and the first insulator be accommodated in the accommodation space, the mechanical collision of the power module in the case of mechanical abuse is reduced, thereby improving the operating stability of the power module.

In some possible implementations, a third insulator is disposed on the second end wall. By disposing the third insulator, the mechanical collision of the power module in the case of mechanical abuse is reduced, thereby improving the operating stability of the power module.

In some possible implementations, the first insulator is a silicone pad. The silicone pad endows the circuit board and the battery cell with a good shock resistance without affecting the electrical connection between the battery cell and the circuit board.

According to a second aspect, this application provides an electrical device. The electrical device includes a load and the power module electrically connected to the load. The load includes at least two drive circuits.

### BRIEF DESCRIPTION OF DRAWINGS

FIG. 1 is a structural block diagram of a power module according to an embodiment of this application;
FIG. 2 is a circuit diagram of a buck-boost circuit according to an embodiment of this application;
FIG. 3 is a structural diagram of a power module according to an embodiment of this application;
FIG. 4 is a schematic structural diagram of a first sealing film of a housing of the battery cell shown in FIG. 3;
FIG. 5 is a schematic structural diagram of a second sealing film of a housing of the battery cell shown in FIG. 3;
FIG. 6 is a cross-sectional view of an electrode assembly according to an embodiment of this application; and
FIG. 7 is a schematic structural diagram of an electrical device as a whole according to this application.

List of reference numerals:
Power module 100
Battery cell 10
Housing 101
First end wall 1011
Second end wall 1012
Electrode assembly 102
First electrode 103
Second electrode 104
Body portion 11
Sealing portion 11a
First direction D1
Second direction D2
Third direction D3
First sealing film 12
Second sealing film 13
First protection layer 125
First metal layer 126
First polymer layer 127
Second protection layer131
Second metal layer 132
Second polymer layer 133
First electrode plate 14
Second electrode plate 15
Separator 16
First current collector 141
First active material layer 142
Safety primer 143
Second current collector 151
Second active material layer 152
Tab 17
Adapter portion 18
Circuit board 20
Buck-boost circuit 21
Switch element 211
Control terminal 2111
First connection terminal 2112
Second connection terminal 2113
Inductor 212
Output terminal 22
First insulator 23
Second insulator 24
Third insulator25
Load 200
Drive circuit 201
Electrical device 1

This application is further described below with reference to specific embodiments and the drawings.

### DETAILED DESCRIPTION OF EMBODIMENTS

The following describes the technical solutions in the embodiments of this application clearly and thoroughly. Evidently, the described embodiments are merely a part of but not all of the embodiments of this application. Unless otherwise defined, all technical and scientific terms used herein bear the same meanings as what is normally understood by a person skilled in the technical field of this application. The terms used in the specification of this application are merely intended to describe specific embodiments but not to limit this application.

The following describes the embodiments of this application in detail. However, this application may be embodied in many different forms, and is in no way construed as being limited to the illustrative embodiments described herein. Rather, the illustrative embodiments are provided in order to impart this application thoroughly in detail to those skilled in the art. In the description of the embodiments of this application, the terms "first" and "second" are merely intended to distinguish between different items but not intended to indicate or imply relative importance or order. For example, the terms such as a first app and a second app are used to distinguish between different apps rather than describe specific order between the apps. A feature defined with "first" or "second" may explicitly or implicitly include one such feature or more such features.

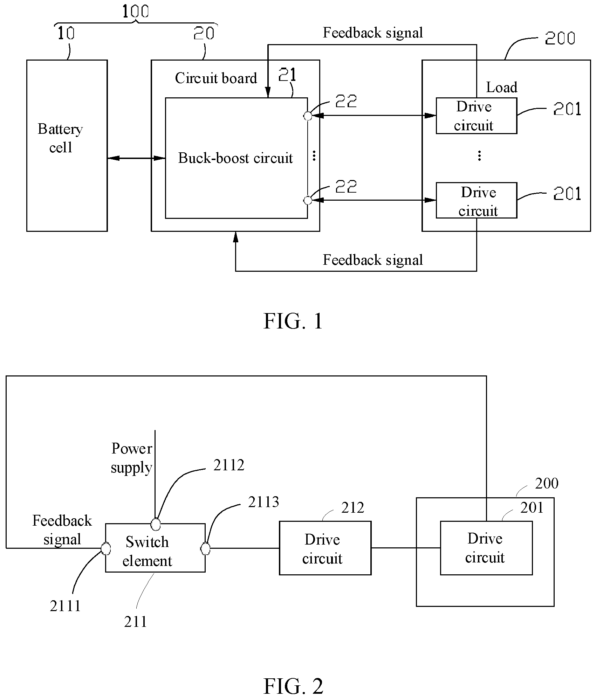

Referring to FIG. 1, this application provides a power module 100. The power module 100 is electrically connected to a load 200 to feed power to the load 200. The load 200 includes at least two drive circuits 201 and electronic components (not shown in the drawing) electrically connected to the drive circuits 201.

The power module 100 includes a battery cell 10 and a circuit board 20. The number of the battery cells 10 is one. The circuit board 20 includes a buck-boost circuit 21 and at least two output terminals 22. The buck-boost circuit 21 is electrically connected to the battery cell 10. At least two output terminals 22 are electrically connected to at least two drive circuits 201 in the load 200 respectively. In an embodiment, the load 200 is an application terminal, such as a mobile phone, a notebook computer, or another electrical device.

In an embodiment of this application, the battery cell 10 may include any type of primary battery, secondary battery, fuel battery, or solar battery. Optionally, the battery cell 10 may be a lithium secondary battery, including a lithium metal secondary battery, a lithium-ion secondary battery, a sodium-ion secondary battery, and the like.

The battery cell 10 is configured to feed a first voltage to the circuit board 20, so as to provide electrical energy for the circuit board 20. Specifically, the battery cell 10 outputs the first voltage to the buck-boost circuit 21. The buck-boost circuit 21 steps up or down the first voltage, so as to output at least two different second voltages to the at least two output terminals 22 respectively. Through the output terminals 22, different second voltages are output to different drive circuits 201 respectively.

The drive circuit 201 is configured to drive, based on the second voltage, an electronic component in the load 200 to work. Understandably, because a plurality of different electronic components are disposed in the load 200 and the plurality of different electronic components work at different operating voltages respectively, different drive circuits 201 may drive corresponding electronic components based on different second voltages, so that the electronic components work normally at the corresponding operating voltage.

Understandably, as shown in FIG. 1, the drive circuit 201 is also electrically connected to the buck-boost circuit 21. In this way, the drive circuit 201 can also feed the rated operating voltage of the electronic component back to the circuit board 20. Specifically, the electronic component may feed the rated operating voltage to the drive circuit 201. The drive circuit 201 may output a feedback signal to the buck-boost circuit 21 based on the rated operating voltage of the electronic component. Understandably, the buck-boost circuit 21 may learn the rated operating voltage of the electronic component based on the feedback signal, so as to adjust a voltage value of the second voltage to be output by the buck-boost circuit.

Referring to FIG. 2, the buck-boost circuit 21 according to this application includes a switch element 211 and an inductor 212. In some embodiments, the switch element 211 may be an electronic component such as a diode, a transistor, a field-effect transistor, or a switch transistor. The inductor 212 may be a coil, a surface mount inductor (SMI), a plug-in inductor, or the like.

In this embodiment of this application, the switch element 211 includes a control terminal 2111, a first connection terminal 2112, and a second connection terminal 2113. The control terminal 2111 of the switch element 211 is electrically connected to the drive circuit 201. The first connection terminal 2112 of the switch element 211 is electrically connected to the battery cell 10. The second connection terminal 2113 of the switch element 211 is electrically connected to the inductor 212. The inductor 212 is electrically connected to the drive circuit 201 in the load 200. The drive circuit 201 is electrically connected to the first connection terminal 2112 of the switch element 211.

In this embodiment of this application, the switch element 211 is configured to receive the first voltage fed by the battery cell 10 and the feedback signal output by the drive circuit 201, and switch between an on-state and an off-state based on the feedback signal. Specifically, in some embodiments, the feedback signal may be a pulse signal. Understandably, the duty cycle of the feedback signal indicates the rated voltage of the drive circuit 201 and the electronic component. The drive circuit 201 may feed different rated voltages back to the switch element 211 by adjusting the duty cycle of the feedback signal. For example, a feedback signal with a duty cycle of 100% indicates that the rated voltage of the drive circuit 201 is 12 V, and a feedback signal with a duty cycle of 50% indicates that the rated voltage of the drive circuit 201 is 6 V Therefore, the switch element 211 can obtain the rated voltage of the drive circuit 201 or the electronic component by detecting the duty cycle of the feedback signal, so as to switch between the on-state and the off-state to output drive signals of different voltage values.

For example, if the switch element 211 is an N-type metal-oxide-semiconductor (N-Metal-Oxide-Semiconductor, NMOS) transistor, the gate of the switch element 211 is a control terminal 2111. In this case, the switch element 211 is in an off-state when the feedback signal is low. When the feedback signal is high, the switch element 211 is in an on-state. In this way, the switch element 211 switches between the on-state and the off-state based on the duty cycle of the feedback signal.

Understandably, in this embodiment, the inductance values of the inductors 212 connected to different drive circuits 201 may be the same or different, without being particularly limited herein.

Understandably, the switching of the switch element 211 between the on-state and the off-state is actually a process of adjusting the voltage value of the drive signal by adjusting the duty cycle of the drive signal. In other words, the switch element obtains the drive signal by stepping up or down the first voltage. In some embodiments, the duty cycles of the feedback signal and the drive signal may be the same. For example, if the duty cycle of the feedback signal is 20%, the switch element 211 may control the duty cycle of the output drive signal to be 20%. In some embodiments, instead, the duty cycles of the feedback signal and the drive signal may complement each other. The complementary duty cycles of the feedback signal and the drive signal may be: a sum of the duty cycles of the feedback signal and the drive signal is 100%. For example, if the duty cycle of the feedback signal is 20%, the switch element 211 may control the duty cycle of the output drive signal to be 80%. In some other embodiments, the voltage value of the drive signal may be adjusted by adjusting the inductance value of the inductor 212. For example, when the inductor 212 is an adjustable inductor, the inductance value of the inductor 212 may be adjusted in real time to change the voltage drop on the inductor 212, thereby affecting the charge-and-discharge process of the inductor 212, changing the energy fed by the inductor 212 to the drive circuit 201, and regulating the second voltage. As another example, the inductance values of the inductors 212 connected to different drive circuits 201 may vary so that the second voltage can be adjusted by disposing the inductors 212 with different inductance values.

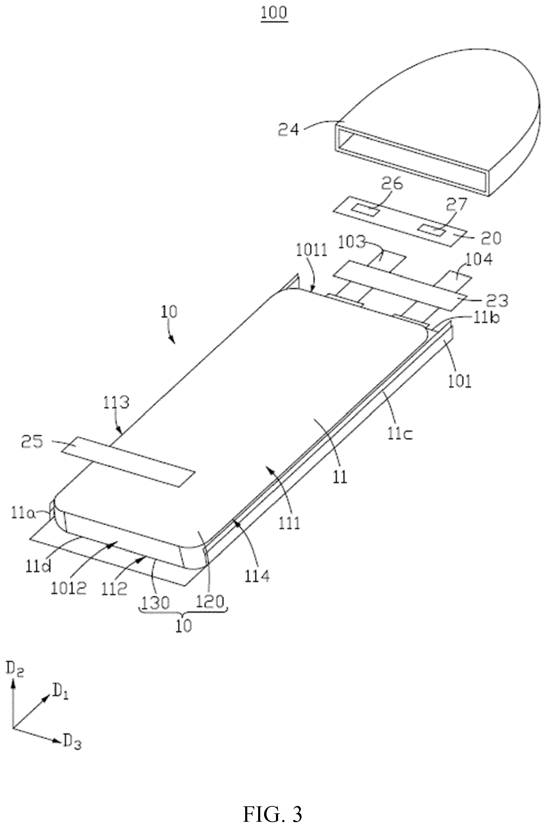

Referring to FIG. 3 to FIG. 4, in some embodiments, the battery cell 10 according to this application is a single high-capacity battery cell. Optionally, the capacity of the battery cell 10 is 5 to 100 A/h. Compared with a battery pack formed of a plurality of battery cells connected in series and parallel, the battery cell 10 according to this application provides a higher capacity and can provide a wider range of supply voltages.

Understandably, with the battery cell 10 being a single high-capacity battery cell, the buck-boost circuit 21 steps up or down the first voltage fed by the battery cell 10, so as to increase the range of the supply voltage of the battery cell 10 and feed power to different drive circuits 201 separately. Compared with the battery pack formed of a plurality of battery cells connected in series and parallel, the battery cell 10 according to this application can use the internal space of the power module 100 to maximum advantage, for example, make the following components and space unnecessary: the circuit board used for connecting a plurality of battery cells in series and parallel; the space for welding the plurality of battery cells to the circuit board; the space to be occupied by the sealing edges of the plurality of battery cells in a case of pouch-type battery cells; the gaps at the junctions between the plurality of battery cells; the space reserved for the glue used for binding the plurality of battery cells; the space at the corners of the electrode assemblies of the plurality of battery cells; and the space to be occupied by the sealing film used for sealing each battery cell, and the like. Therefore, the battery cell 10 according to this application can increase the energy density. In addition, this application reduces the number of required battery cells 10, thereby simplifying the structure of the entire power module 100, and reducing the manufacturing cost and maintenance cost. Moreover, the battery cell 10 according to this application does not need to match parameters such as the capacity, voltage, and internal resistance of a plurality of battery cells, thereby avoiding the step of replenishing power in the case that a voltage difference exists between a plurality of battery cells. In addition, the single battery cell 10 generates less heat than the heat emitted by the battery pack formed of a plurality of battery cells. Therefore, this application simplifies the manufacturing process of the battery cells and improves the service life and reliability of the battery cells.

Specifically, the battery cell 10 includes a housing 101, an electrode assembly 102, and an electrolytic solution (not shown in the drawing), a first electrode 103, and a second electrode 104. The electrode assembly 102 is located in the housing 101. The housing 101 includes a first end wall 1011 and a second end wall 1012 opposite to each other in the first direction D1. Both the first electrode 103 and the second electrode 104 are electrically connected to the electrode assembly 102, and protrude out of the housing 101 from the first end wall 1011. The first electrode 103 and the second electrode 104 may be connected to an external component such as the circuit board 20 provided in this application.

In some embodiments, a first insulator 23 is disposed between the circuit board 20 and the first end wall 1011. The first insulator 23 can provide a buffer when the power module 100 is mechanically abused, so as to reduce the mechanical collision between the circuit board 20 and the battery cell 10, and reduce the risk of damaging the housing 101 and leaking electrolyte. Moreover, the first insulator 23 can isolate the head of the battery cell 10 (that is, the part close to the first end wall 1011 on the battery cell 10) from other components such as the circuit board 20, the first electrode 103, or the second electrode 104. Specifically, the first insulator 23 may be disposed in a space formed and enclosed by the sealing portion 11a and the first end wall 1011. The first insulator 23 may be insulating resin such as silicone, epoxy resin, or the like. In some embodiments, the first insulator 23 may be a silicone pad.

Further, the power module 100 may further include a second insulator 24. The second insulator 24 and the first end wall 1011 close in to form an accommodation space. The first insulator 23, the first electrode 103, the second electrode 104, and the circuit board 20 are all located in the accommodation space. The second insulator 24 is configured to fix the circuit board 20 onto the first end wall 1011 of the battery cell 10, and can also reduce the collision on the circuit board 20 and the head of the battery cell 10 occurring when the power module 100 is mechanically abused, thereby reducing the risk of failure. It is hereby noted that the power module 100 needs to electrically connect the output terminal of the circuit board to the drive circuit in the load in a conventional manner in the art. The connection manners include but are not limited to: the output terminal of the circuit board is electrically connected to the drive circuit by running through the second insulator 24.

Further, a third insulator 25 may be disposed on the second end wall 1012. The third insulator 25 can reduce the collision on the ending of the battery cell 10 (that is, the part close to the second end wall 1012 on the battery cell 10) when the power module 100 is mechanically abused, thereby reducing the risk of failure. In some embodiments, the second insulator 24 and the third insulator 25 are insulating tape.

As shown in FIG. 3, in some embodiments, the battery cell 10 may be, but is not limited to, a pouch-type cell. The housing 101 includes a body portion 11 and a sealing portion 11a. The first electrode 103 and the second electrode 104 protrude from the sealing portion 11a. The electrode assembly 102 is disposed inside the body portion 11. The body portion 11 includes the first end wall 1011 and the second end wall 1012. The sealing portion 11a is connected to the first end wall 1011. A thickness direction of the electrode assembly 102 is defined as a second direction D2, and a direction perpendicular to the first direction D1 and the second direction D2 is a third direction D3.

The housing 101 may be formed by folding the first sealing film 12 and the second sealing film 13 along the sealing edges after packaging.

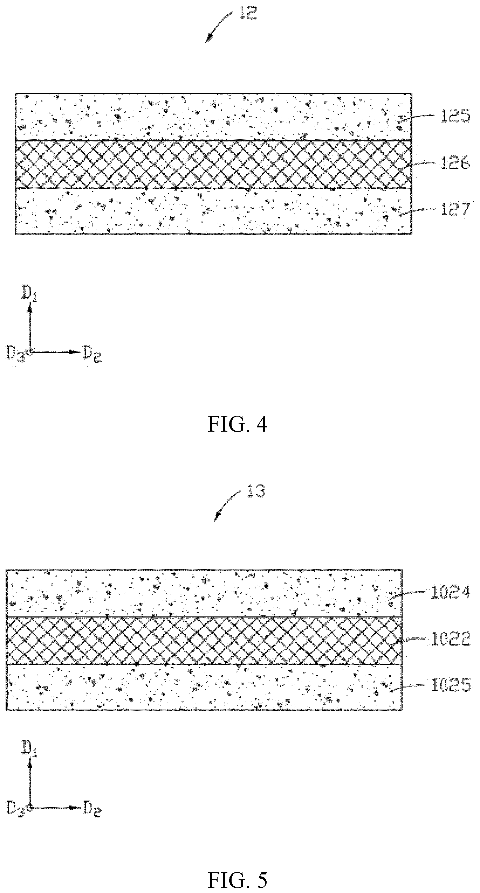

As shown in FIG. 4, the first sealing film 12 may include a first protection layer 125, a first metal layer 126, and a first polymer layer 127 that are stacked in sequence. The first polymer layer 127 is closer to the electrode assembly 102 than the first protection layer 125. The first protection layer 125 may be made of polymer resin, and may be configured to protect the first metal layer 126, reduce the risk of damage to the first metal layer 126 caused by an external force, defer air permeation from an external environment, and maintain a normal operation environment inside the battery cell 10.

In some embodiments, the material of the first protection layer 125 may be at least one selected from ethylene terephthalate, polybutylene terephthalate, polyvinylidene fluoride, polytetrafluoroethylene, polypropylene, polyamide, or polyimide. The thickness of the first protection layer 125 may range from 15 µm to 35 µm.

The first metal layer 126 may be configured to defer moisture penetration from the external environment, and reduce the damage to the electrode assembly 102 caused by the external force. In some embodiments, the first metal layer 126 may be an aluminum foil layer or a steel foil layer. Due to a relatively large capacity of the battery cell 10, the weight is increased. In order to reduce the risk of failure of the power module 100 in the case of mechanical abuse (such as drop or impact) and improve reliability, the thickness of the first metal layer 126 is greater than 40 µm. The first polymer layer 127 is fusible by heating, and suitable for sealing, and can reduce the risk of the multilayer sheet being dissolved or swollen by the organic solvent in the electrolytic solution. The first polymer layer 127 can also reduce the risk of corrosion of the metal layer caused by the contact between an electrolyte in the electrolytic solution and the first metal layer 126. In some embodiments, the first polymer material 127 includes a polymer material. The polymer material may be at least one selected from polypropylene, a propylene copolymer, polyethylene, or polymethyl methacrylate. The thickness of the first polymer layer 127 may range from 10 µm to 40 µm.

In some embodiments, the first sealing film 12 may further include a first bonding layer (not shown in the drawing) and a second bonding layer (not shown). The first bonding layer is disposed between the first protection layer 125 and the first metal layer 126, and may be configured to bond the first protection layer 125 and the first metal layer 126. The second bonding layer is disposed between the first metal layer 126 and the first polymer layer 127, and may be configured to bond the first metal layer 126 and the first polymer layer 127.

Referring to FIG. 5, the second sealing film 13 may include a second protection layer 131, a second metal layer 132, and a second polymer layer 133 that are stacked in sequence. To further reduce the risk of failure of the power module 100 in the case of mechanical abuse, the thickness of the second metal layer 132 may be set to be greater than 40 µm. Understandably, when the first sealing film 12 and the second sealing film 13 may be obtained by folding a single sealing film, the materials of the second protection layer 131, the second metal layer 132, and the second polymer layer 133 are the same as the materials of the first protection layer 125, the first metal layer 126, and the first polymer layer 127 respectively, details of which are omitted here.

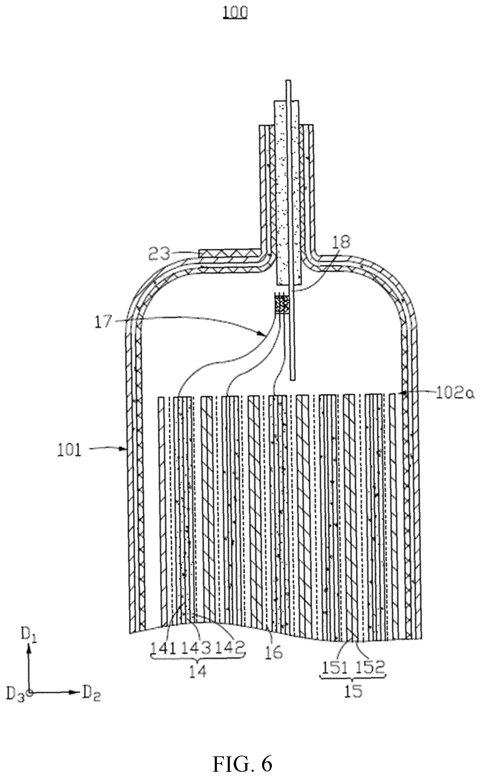

Referring to FIG. 6, the electrode assembly 102 includes a first electrode plate 14, a second electrode plate 15, and a separator 16. The separator 16 is disposed between the first electrode plate 14 and the second electrode plate 15. The first electrode plate 14 includes a first current collector 141 and a first active material layer 142 disposed on the first current collector 141. The second electrode plate 15 includes a second current collector 151 and a second active material layer 152 disposed on the second current collector 151. The first electrode 103 and the second electrode 104 are electrically connected to the first current collector 141 and the second current collector 151 respectively, so as to lead out the polarity of the first electrode plate 14 and the second electrode plate 15. In some embodiments, the first electrode plate 14 is a positive electrode plate, and the second electrode plate 15 is a negative electrode plate. The first electrode plate 14 may be a positive electrode plate or a negative electrode plate. Correspondingly, the first current collector 141 may be a positive current collector or negative current collector, and the first active material layer 142 may be a positive active material layer or negative active material layer. In some embodiments, the first electrode plate 14 is a positive electrode plate, and the second electrode plate 15 is a negative electrode plate.

The positive current collector may be an aluminum foil or nickel foil, and the negative current collector may be at least one of a copper foil, a nickel foil, or a carbon-based current collector.

The positive active material layer includes a positive active material. The positive active material includes a compound in favor of reversibly intercalating and deintercalating metal ions (such as lithium ions and sodium ions, with lithium ions used as an example below), where the compound is a lithiated intercalation compound. In some embodiments, the positive active material may include a lithium transition metal composite oxide. The lithium transition metal composite oxide contains lithium and at least one element selected from cobalt, manganese, or nickel. In some embodiments, the positive active material is at least one selected from lithium cobalt oxide (LiCoO₂), lithium nickel-cobalt-manganese ternary material (NCM), lithium nickel-cobalt-aluminum ternary material (NCA), lithium manganese oxide (LiMn₂O₄), lithium nickel manganese oxide (LiNi_{0.5}Mn_{1.5}O₄), or lithium iron phosphate (LiFePO₄).

The negative active material layer contains a negative active material, and adopts a negative active material that is known in the art and capable of reversible deintercalation of active ions, without being limited in this application. For example, the negative active material may include, but without being limited to, one of or any combination of graphite, soft carbon, hard carbon, carbon fiber, mesocarbon microbeads, silicon-based material, tin-based material, lithium titanium oxide, or other lithium-alloyable metals. The graphite may be one of or any combination of artificial graphite, natural graphite, or modified graphite. The silicon-based material may be one of or any combination of simple-substance silicon, a silicon-oxygen compound, a silicon-carbon composite, a silicon alloy, or the like. The tin-based material may be one of or any combination of simple-substance tin, a tin-oxide compound, a tin alloy, or the like.

The separator 16 includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. The polyethylene and polypropylene are highly effective in reducing the risk of short circuits, and improve stability of the battery cell 10 by virtue of a turn-off effect.

Referring to FIG. 6, the electrode assembly 102 assumes a jelly-roll structure. To be specific, the first electrode plate 14, the separator 16, and the second electrode plate 15 are sequentially stacked first, and then wound to form the electrode assembly 102. In some embodiments, the electrode assembly 102 assumes a multi-tab structure. The first electrode 103 includes a plurality of tabs 17 and one adapter portion 18. Each tab 17 is connected to the first current collector 141 separately. The adapter portion 18 is connected to the tabs 17, and protrudes out of the housing 101. The tabs 17 may be formed together with the first current collector 141 in one piece (that is, the tabs 17 are formed by cutting the first current collector 141) or may be fixed by welding. The adapter portion 18 is fixed to the plurality of tabs 17 by welding. Similarly, the second electrode 104 may include a plurality of tabs (not shown in the drawing) and one adapter portion (not shown in the drawing). Each tab is connected to the second current collector 151 separately. The adapter portion is connected to the tabs, and protrudes out of the housing 101. Understandably, in some embodiments, due to the large capacity of the battery cell 10, the multi-tab structure can make the current more dispersed and uniform during charging of the battery cell 10, reduce the heat generated at the first electrode 103 and the second electrode 104, reduce the risk of local overheating, and improve reliability and safety.

In other embodiments, the electrode assembly 102 may be a stacked structure instead, in which the first electrode plate 14, the separator 16, and the second electrode plate 15 are stacked in sequence to form the electrode assembly 102. In a stacked structure, a second electrode plate 15 is disposed between two adjacent first electrode plates 14. A first electrode plate 14 is disposed between two adjacent second electrode plates 15. A tab is connected onto each first electrode plate 14 and each second electrode plate 15 separately. Therefore, the multi-tab structure can also reduce the heat generated at the first electrode 103 and the second electrode 104, reduce the risk of local overheating, and improve reliability and safety.

In some embodiments, the first electrode plate 14 further includes a safety primer 143. The safety primer 143 is disposed between the first active material layer 142 and the surface of the first current collector 141. By disposing the safety primer 143, the adhesion between the first current collector 141 and the first active material layer 142 can be increased, thereby reducing the risk of detachment of the active material during cycling, and improving the safety performance of the battery cell 10. In some embodiments, the safety primer 143 is a lithium iron phosphate coating. The safety primer can also reduce a short-circuit current and thereby reduce heat generation in the case of a short circuit.

In some embodiments, a bonding layer 19 may be disposed between an inner surface of the housing 101 and the electrode assembly 102. For example, when the first sealing film 12 includes a first protection layer 125, a first metal layer 126, and a first polymer layer 127 that are stacked in sequence, the bonding layer 19 can be bonded onto both the first polymer layer 127 and the electrode assembly 102. In this way, when the power module 100 is mechanically abused, the bonding layer 19 can suppress the wobbling of the electrode assembly 102 in the housing 101, and reduce the probability of bursting the housing 101 open and the risk of electrolyte leakage or a short circuit or even fire. When the outermost side of the electrode assembly 102 is the current collector, the bonding layer 19 can also reduce the risk of the current collector being torn up. The bonding layer 19 may be a hot-melt adhesive or double-sided tape.

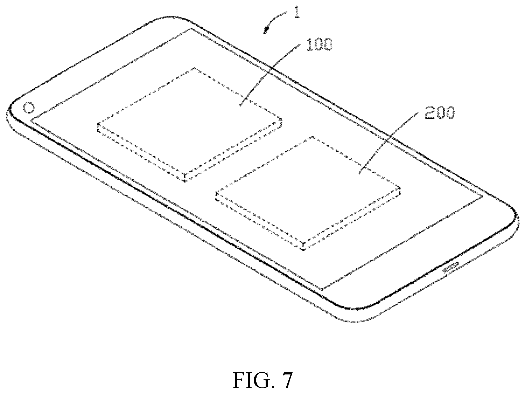

Referring to FIG. 7, an embodiment of this application further provides an electrical device 1. The electrical device 1 includes a power module 100 and an external load 200.

The power module 100 according to this application is applicable to electrical devices 1 in various fields. In an embodiment, the electrical device 1 according to this application may be, but is not limited to, a notebook computer, peninputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, lighting appliance, toy, game console, watch, electric tool, flashlight, camera, large household battery, lithium-ion capacitor, or the like.

A person of ordinary skill in the art understands that the foregoing embodiments are merely intended to illustrate this application, but not intended as a limitation on this application. Any and all appropriate modifications and changes made to the embodiments without departing from the spirit and scope of this application still fall within the protection scope of this application.

## Claims

1. A power module, comprising a battery cell and a circuit board electrically connected to the battery cell, wherein a number of the battery cell is one, the battery cell is configured to feed a first voltage to the circuit board, and the battery cell comprises a housing and an electrode assembly disposed in the housing, **characterized in that**:
the circuit board comprises a buck-boost circuit and at least two output terminals;
the buck-boost circuit is configured to receive the first voltage and step up or step down the first voltage, so as to output at least two different second voltages to the at least two output terminals respectively;
each of the output terminals is configured to feed one of the second voltages to a drive circuit in a load electrically connected to the output terminal; and
the power module comprises a housing, the battery cell and the power module are accommodated in the housing, and the circuit board is fixed onto the battery cell or the housing.

2. The power module according to claim 1, **characterized in that** the circuit board is further configured to receive at least one feedback signal output by the drive circuit; the feedback signal is used for indicating a rated voltage of the drive circuit; and the buck-boost circuit adjusts a corresponding second voltage to the rated voltage based on the feedback signal, and outputs the second voltage to the drive circuit through a corresponding output terminal.

3. The power module according to claim 2, **characterized in that** the feedback signal is a pulse signal; and the drive circuit is able to feed different rated voltages back to the circuit board by adjusting a duty cycle of the pulse signal.

4. The power module according to claim 3, **characterized in that** the buck-boost circuit comprises a switch element, the switch element comprises a control terminal and a first connection terminal, the control terminal is configured to receive the feedback signal, the first connection terminal is configured to receive the first voltage, and the switch element is switched between an on-state and an off-state based on the duty cycle of the feedback signal, so as to adjust a voltage value of the second voltage.

5. The power module according to claim 4, **characterized in that** the buck-boost circuit further comprises an inductor, the switch element further comprises a second connection terminal, the second connection terminal is electrically connected to the inductor, the inductor is electrically connected to the drive circuit, and the voltage value of the second voltage is adjustable by adjusting an inductance value of the inductor.

6. The power module according to claim 1, **characterized in that** a capacity of the battery cell is 5 to 100 A/h, the first voltage is 3.0 V to 5.0 V, and a ratio of the second voltage to the first voltage is 0.2 to 3.

7. The power module according to claim 6, **characterized in that** the ratio of the second voltage to the first voltage is 1.5 to 2.5.

8. The power module according to claim 1, **characterized in that** the housing comprises a first sealing film and a second sealing film disposed opposite to each other, the first sealing film comprises a first metal layer, the second sealing film comprises a second metal layer, and a thickness of at least one of the first metal layer or the second metal layer is greater than 40 µm.

9. The power module according to claim 8, **characterized in that** the electrode assembly assumes a multi-tab structure.

10. The power module according to claim 1, **characterized in that** the electrode assembly comprises a positive electrode plate, the positive electrode plate comprises a positive current collector and a positive active material layer, and a safety primer is further disposed between the positive current collector and the positive active material layer.

11. The power module according to claim 10, **characterized in that** the safety primer is a lithium iron phosphate coating.

12. The power module according to claim 1, **characterized in that** the housing comprises a first end wall and a second end wall disposed opposite to each other, the battery cell comprises a positive electrode and a negative electrode, the positive electrode and the negative electrode are led out from the first end wall and electrically connected to the circuit board, and a first insulator is disposed between the circuit board and the first end wall.

13. The power module according to claim 12, **characterized in that** the power module further comprises a second insulator, the second insulator is connected to the housing, the first end wall and the second insulator close in to form an accommodation space, and the circuit board and the first insulator are disposed in the accommodation space.

14. The power module according to claim 12, **characterized in that** a third insulator is disposed on the second end wall.

15. The power module according to any one of claims 12 to 14, **characterized in that** the first insulator is a silicone pad.

16. An electrical device, comprising a load and a power module electrically connected to the load, wherein the load comprises at least two drive circuits, **characterized in that** the power module is the power module according to any one of claims 1 to 15.
